# EUROPÄISCHE PATENTSCHRIFT

(11) **EP 1 101 027 B1**
(45) Veröffentlichungstag und Bekanntmachung des Hinweises auf die Patenterteilung: **21.01.2004**
(21) Anmeldenummer: 99938377.1
(22) Anmeldetag: 29.07.1999
(51) Int. Cl.: F02D 17/04, E01C 19/30, F02D 41/22

(54) **VORRICHTUNG UND VERFAHREN ZUM STEUERN DER DREHZAHL EINES VERBRENNUNGSMOTORS**
DEVICE AND METHOD FOR CONTROLLING THE SPEED OF AN INTERNAL COMBUSTION ENGINE
DISPOSITIF ET PROCEDE DE COMMANDE DU NOMBRE DE TOURS D'UN MOTEUR A COMBUSTION INTERNE

(30) Priorität: 30.07.1998 DE 19834443
(43) Veröffentlichungstag der Anmeldung: 23.05.2001
(73) Patentinhaber: Wacker Construction Equipment AG, 80809 München (DE)
(72) Erfinder: STEFFEN, Michael, D-82131 Stockdorf (DE)
(74) Vertreter: Müller - Hoffmann & Partner
(86) Internationale Anmeldenummer: PCT/EP1999/005445
(87) Internationale Veröffentlichungsnummer: WO 2000/006879

(56) Entgegenhaltungen:
- EP-A- 0 242 809
- FR-A- 2 574 122
- US-A- 4 137 889
- US-A- 5 154 150
- US-A- 5 353 762

## Beschreibung

Die Erfindung betrifft eine Vorrichtung und ein Verfahren zum Steuern der Drehzahl eines Verbrennungsmotors in einem Arbeitsgerät.

Derartige Arbeitsgeräte, wie z.B. ein Vibrationsstampfer zur Bodenverdichtung oder ein Schlaghammer, weisen zum Antrieb einen Benzinmotor, gelegentlich aber auch einen Dieselmotor auf. Der Motor wird - soweit kein Elektrostarter vorgesehen ist - üblicherweise durch Betätigen des Zugseils eines Reversierstarters gestartet. Dazu hält der Bediener z.B. den Stampfer mit einer Hand fest, während er mit der anderen Hand an dem Zugseil zieht. Da zum Starten der Gashebel des Motors meist auf Vollgasstellung gestellt wird, läuft der Motor sofort auf eine hohe Drehzahl, die oftmals sogar oberhalb der Betriebsdrehzahl liegt. Dadurch wird eine den Motor mit dem Stampfsystem koppelnde Fliehkraftkupplung geschlossen, wodurch das Stampfsystem in Betrieb gesetzt wird. Dies führt dazu, daß der Stampfer starke Stampfbewegungen ausführt und von dem Bediener, der den Stampfer zu diesem Zeitpunkt nur mit einer Hand hält, kaum beherrschbar ist. Die Beherrschbarkeit wird auch dadurch erschwert, daß der Stampfer zum Starten leicht schräg gestellt wird, um das Zugseil leichter zu erreichen. Die Stampfbewegung erfolgt daher nicht ausschließlich in Vertikalrichtung, sondern auch zur Seite, wodurch die Bedienbarkeit zusätzlich erschwert und der Bediener sogar gefährdet wird. Ähnliche Probleme können sich auch bei Vibrationsplatten stellen.

Darüber hinaus wird beim Starten üblicherweise am Vergaser eine Chokeklappe geschlossen, die zum Beenden des Startvorgangs wieder geöffnet werden muß. Wegen des direkt nach dem Starten überfetteten Verbrennungsgemischs läuft der Motor unrund, was zu unregelmäßigen, unkontrollierten Bewegungen des Stampfers führt. In diesem Zustand muß der Bediener versuchen, den unterhalb der Bedienungselemente am Vergaser angeordneten Chokehebel zu erreichen und zu betätigen, wodurch er sich mit Kopf und Arm dem unberechenbaren Stampfer in gefährlicher Weise nähern muß. Erschwert wird diese Tätigkeit auch dadurch, daß ein Umgreifen, d.h. Loslassen des Stampferhaltebügels erforderlich ist.

Eine Einrichtung zur Begrenzung der Drehzahl eines Verbrennungsmotors auf eine maximal zulässige Abregeldrehzahl ist in der DE 196 09 536 A1 beschrieben. Das Überschreiten der Abregeldrehzahl wird von einem Sensor erfasst, der über eine Elektronik einen eine Gashebelstellung überlagernden Getriebemotor ansteuert, durch den die Stellung einer Drosselklappe des Verbrennungsmotors beeinflusst werden kann.

Aus der EP-A-242 809 ist eine an einem Handgriff führbare Vibrationsplatte bekannt Unterhalb von dem Handgriff ist ein zusätzlicher Totmann-Handgriff vorgesehen, der mit einem Gaszug gekoppelt ist. Um den Motor der Vibrationsplatte auf eine Betriebsdrehzahl zu bringen, ist es erforderlich, daß der Bediener den Totmann-Handgriff nach oben schwenkt und gegen den Bedienungshandgriff hält. Sobald der Bediener den Totmann-Handgriff losläßt, verschwenkt dieser aufgrund seines Eigengewichts nach unten und reduziert über den Gaszug die Motordrehzahl auf eine Leerlaufdrehzahl.

Der Erfindung liegt die Aufgabe zugrunde, eine Vorrichtung und ein Verfahren für ein Arbeitsgerät anzugeben, bei dem ein unkontrolliertes Loslaufen des Arbeitsgeräts und eine damit verbundene erschwerte Handhabung beim Starten, aber auch bei anderen, z.B. den Bediener gefährdenden Sonderbetriebszuständen vermieden wird.

Erfindungsgemäß wird die Aufgabe durch eine Vorrichtung gemäß Patentanspruch 1 gelöst. Vorteilhafte Weiterentwicklungen der Erfindung sind den abhängigen Ansprüchen zu entnehmen.

Erfindungsgemäß wird eine Vorrichtung zum Steuern der Drehzahl eines Verbrennungsmotors in einem Arbeitsgerät angegeben, mit einer Erkennungseinrichtung zum Erkennen eines durch Einwirkung von außerhalb des Arbeitsgeräts bewirkten Sonderbetriebszustands des Arbeitsgeräts und mit einer von der Erkennungseinrichtung ansteuerbaren Einstelleinrichtung zum Einstellen der Motordrehzahl auf eine Sicherheitsdrehzahl unterhalb einer Betriebsdrehzahl des Verbrennungsmotors.

Die Erkennungseinrichtung ermöglicht es, einen Sonderbetriebszustand des Arbeitsgeräts, wie z.B. das Starten des Arbeitsgeräts, aber auch Gefahrzustände durch Loslassen von Haltegriffen des Arbeitsgeräts oder ein Umkippen des Arbeitsgeräts zu registrieren, woraufhin ein entsprechendes Signal an die Einstelleinrichtung geliefert wird, die die Motordrehzahl auf eine deutlich niedrigere und damit ungefährliche Drehzahl, z.B. die Leerlaufdrehzahl, reduziert. Erst wenn die Erkennungseinrichtung keinen Sonderbetriebszustand mehr erkennt, ist es für den Bediener wieder möglich, die Drehzahl zu erhöhen.

Als Sonderbetriebszustand wird vorteilhafterweise ein Zustand erkannt, in dem das Arbeitsgerät gestartet oder nicht ordnungsgemäß geführt wird oder eine Schrägstellung des Arbeitsgerät außerhalb eines zulässigen Bereichs erkannt wird.

Zum Erkennen des Startvorgangs ist es der Erkennungseinrichtung möglich, einen Drehzahlanstieg des Verbrennungsmotors aus dem Stillstand zu registrieren. Weiterhin kann die Erkennungseinrichtung bei einer besonders vorteilhaften Ausführungsform der Erfindung feststellen, wenn die Zündanlage des Verbrennungsmotors mit Energie versorgt wird, was ebenfalls als Startvorgang interpretiert wird. Diese Ausführungsform eignet sich insbesondere für Verbrennungsmotoren mit Magnetzündanlage, bei der die Zündungsenergie. nicht von einer externen Energiequelle zur Verfügung gestellt, sondern von einem auf der Motorwelle mitlaufenden Magnetrad unmittelbar erzeugt wird. Das Vorhandensein von Zündenergie ist dann gleichbedeutend mit dem Überschreiten einer bestimmten Motordrehzahl.

Alternativ dazu können auch für jede andere Art von Zündanlage Lösungen gefunden werden, mit denen ein Erkennen des Startvorgangs bzw. Drehzahlanstiegs durchgeführt werden kann. Bei Batteriezündungen ist es z. B. möglich, ein von der Kurbelwelle abgenommenes Signal, das der Kurbelwellendrehzahl entspricht, an die Erkennungseinrichtung weiterzuleiten.

Bei einer anderen vorteilhaften Ausführungsform der Erfindung weist die Erkennungseinrichtung ein Zeitglied auf, durch das ein vorbestimmter Zeitraum nach dem Starten des Motors überwacht wird, während dem die Motordrehzahl auf Sicherheitsdrehzahl eingestellt wird. Erst nach Ablauf des vorbestimmten Zeitraums wird es der Einstelleinrichtung ermöglicht, auf Betriebsdrehzahl zu erhöhen, wobei angenommen wird, daß der Motor nach Ablauf des Zeitraums rund läuft und der Bediener inzwischen Kontrolle über den Stampfer bzw. über das Arbeitsgerät erlangt hat.

Mit den Sensoren am Haltegriff wird registriert, daß der Bediener den Haltegriff des Arbeitsgeräts ordnungsgemäß hält. Nur in diesem Fall erkennt die Erkennungseinrichtung einen normalen Betriebszustand, so daß die Betriebsdrehzahl gefahren werden kann.

Bei einer anderen Weiterentwicklung der Erfindung weist die Erkennungseinrichtung eine Einrichtung zum Ermitteln der Lage des Arbeitsgerätes, insbesondere der Schräglage auf und erkennt bei Überschreiten eines vorbestimmten Lage-Grenzwertes einen Sonderbetriebszustand.

Dies ermöglicht es, z.B. bei einem Umkippen des Arbeitsgerätes, den Verbrennungsmotor sofort auf Sicherheitsdrehzahl einzustellen und eine Gefährdung des Bedieners zu vermeiden.

Die Vorrichtung kann besonders vorteilhaft bei einem Stampfer oder einem Schlaghammer mit Verbrennungsmotor eingesetzt werden.

Diese und weitere Vorteile und Merkmale der Erfindung werden nachfolgend anhand von bevorzugten Ausführungsformen näher erläutert.

Ein Stampfer zur Bodenverdichtung, bei dem die erfindungsgemäße Vorrichtung vorteilhaft zum Einsatz kommt, wird von einer üblichen Magnet-Zündanlage betrieben, wobei bei jeder Kurbelumdrehung über ein auf der Kurbel angeordnetes Magnetrad ein Magnetladeimpuls abgegeben wird. Aufgrund des zeitlichen Abstands der Magnetladeimpulse kann eine an sich bekannte Elektronik die Motordrehzahl erfassen. In Abhängigkeit von dem Betriebszustand des Motors leitet die Elektronik dann Zündmaßnahmen für den gewünschten Drehzahlwert ein, z.B. durch Einstellen des Zündzeitpunkts oder durch Auslöschen einzelner Zündimpulse. Dadurch pendelt die Motordrehzahl um den von der Elektronik vorgegebenen Wert. Bei anderen bekannten Drehzahlregelungen werden Eingriffe in das Vergasersystem angesteuert, z. B. durch Beeinflussung der Drosselklappenstellung.

Erfindungsgemäß erkennt nun eine Erkennungseinrichtung in der Elektronik, daß das Arbeitsgerät gestartet werden soll und wählt dazu eine Motordrehzahl vor, die unter der Einschaltdrehzahl einer den Motor mit dem Stampfer oder einem Schlagsystem für einen Hammer koppelnden Fliehkraftkupplung liegt. Diese sogenannte Sicherheitsdrehzahl sollte auf jeden Fall auf einem vergleichsweise niedrigen Wert unterhalb der Betriebsdrehzahl liegen, um die Beherrschbarkeit des startenden Arbeitsgeräts durch den Bediener sicherzustellen.

Die Erkenntnis, daß der Motor gestartet werden soll, kann von der Erkennungseinrichtung auf verschiedene Weise gewonnen werden.

Bei einer Ausführungsform der Erfindung registriert die Elektronik einen Drehzahlübergang aus dem Stillstand auf eine gewisse Mindestdrehzahl. Der Drehzahlanstieg wird dahingehend interpretiert, daß der Bediener den Reversierstarter über das Zugseil betätigt hat.

Bei einer anderen Ausführungsform der Erfindung erkennt die Elektronik das erstmalige Vorhandensein von Zündenergie in der Zündanlage. Wie bereits beschrieben, erzeugt insbesondere die Magnet-Zündanlage ihre Zündenergie mit Hilfe des auf der Kurbelwelle angeordneten Magnetrads selbst, so daß das Vorhandensein von Zündenergie bzw. ein Anstieg von Zündenergie gleichbedeutend ist mit einem Drehzahlanstieg.

Bei einer wiederum anderen Ausführungsform der Erfindung ist ein Zweipunktschalter oder ein Taster vorgesehen, der normalerweise in einer Stand-by-Stellung steht, in der der Motor mit Sicherheitsdrehzahl dreht, und der vom Bediener zum Inbetriebsetzen des Geräts betätigt werden muß, woraufhin der Motor mit Betriebsdrehzahl drehen kann. Es ist bei der Erfindung zweckmäßig, Sensoren, nämlich kapazitive oder optische Näherungsschalter oder berührungsempfindliche Griffelemente vorzusehen.

Wenn die Elektronik das Vorhandensein oder Nichtvorhandensein des Sonderbetriebszustands erkannt hat, erfolgt das Einstellen der Drehzahl in an sich bekannter und teilweise oben beschriebener Weise. Außer den Drehzahlregelungen für Benzinmotoren kann auch die Drehzahl von Dieselmotoren angesteuert werden.

Die Erhöhung der Drehzahl über die Start- oder Sicherheitsdrehzahl hinaus auf die Betriebsdrehzahl ist erst dann möglich, wenn die Elektronik nicht mehr den Sonderbetriebszustand erkennt. Dies kann außer den bisher beschriebenen Möglichkeiten auch dadurch erfolgen, daß die Elektronik einen weiteren Impuls erhält, z.B. dadurch, daß der Bediener einen bei den Bedienelementen angeordneten Schalter umlegt oder einen Knopf betätigt. Während der gesamten Zeit des Sonderbetriebszustands kann sich der Gashebel in Vollgas- oder Betriebsstellung befinden, ohne daß dadurch tatsächlich die Motordrehzahl folgt.

Bei einer anderen Ausführungsform der Erfindung weist die Elektronik ein Zeitglied auf, das zu Beginn des Startens getriggert wird und erst nach Ablauf eines bestimmten Zeitraums nach dem Starten des Motors das Hochfahren auf Betriebsdrehzahl erlaubt. Dabei wird angenommen, daß der Bediener in der Zwischenzeit die vollständige Beherrschung über das Arbeitsgerät gewonnen hat.

Weiterhin ist eine Meßanordnung möglich, die den Rundlauf des Motors oder des gesamtes Arbeitsgeräts überwacht, und erst bei ordnungsgemäßem Rundlauf eine Erhöhung der Drehzahl auf Betriebsdrehzahl zuläßt.

Außer dem Startvorgang sind auch weitere Betriebszustände denkbar, die für das Gerät oder den Bediener kritisch werden können. Dazu gehören Zustände. bei denen der Bediener das Gerät vollständig losläßt oder über einen längeren Zeitraum nur mit einer Hand hält. Ebenfalls kritisch kann es sein, wenn das Arbeitsgerät eine unzulässige Schräg- oder Seitenlage einnimmt oder gar umkippt.

Diese Zustände können durch zusätzliche Sensoren, Schalter oder Taster erfaßt werden. Wenn ein entsprechendes Signal von den Sensoren, o. ä. abgegeben wird, erkennt die Elektronik einen Sonderbetriebszustand und reduziert die Drehzahl sofort auf Sicherheitsdrehzahlniveau, wodurch eine Gefährdung von Mensch und Maschine ausgeschlossen, zumindest aber reduziert wird.

## Patentansprüche

1. Vorrichtung zum Steuern der Drehzahl eines Verbrennungsmotors in einem an einem Haltegriff führbaren Arbeitsgerät, mit
- einer Erkennungseinrichtung zum Erkennen eines durch Einwirkung von außerhalb des Arbeitsgeräts bewirkten Sonderbetriebszustands des Arbeitsgeräts; und
- einer von der Erkennungseinrichtung bei Erkennen des Sonderbetriebszustands ansteuerbaren Einstelleinrichtung zum Einstellen der Motordrehzahl auf eine Sicherheitsdrehzahl unterhalb einer Betriebsdrehzahl des Verbrennungsmotors;
**dadurch gekennzeichnet, daß**
die Erkennungseinrichtung Sensoren an dem Haltegriff aufweist, zum Erkennen, daß der Haltegriff ordnungsgemäß gehalten wird, wobei die Sensoren als kapazitive oder optische Näherungsschalter oder berührungsempfindliche Griffelemente ausgebildet sind.

2. Vorrichtung nach Anspruch 1, **dadurch gekennzeichnet, daß** der Sonderbetriebszustand ein Zustand ist, in dem
- das Arbeitsgerät gestartet wird; oder
- das Arbeitsgerät nicht ordnungsgemäß geführt wird; oder
- eine Schrägstellung des Arbeitsgeräts außerhalb eines zulässigen Bereichs für eine Schräglage erkannt wird.

3. Vorrichtung nach Anspruch 1 oder 2, **dadurch gekennzeichnet, daß** die Erkennungseinrichtung Mittel zum Erkennen eines Drehzahlanstiegs des Verbrennungsmotors aus dem Stillstand aufweist.

4. Vorrichtung nach einem der vorstehenden Ansprüche, **dadurch gekennzeichnet, daß** die Erkennungseinrichtung Mittel zum Erkennen eines Versorgungszustandes einer Zündanlage des Verbrennungsmotors mit Energie aufweist.

5. Vorrichtung nach einem der vorstehenden Ansprüche, **dadurch gekennzeichnet, daß** die Erkennungseinrichtung ein beim Starten des Verbrennungsmotors triggerbares Zeitglied aufweist, und daß die Einstelleinrichtung die Motordrehzahl auf Sicherheitsdrehzahl einstellt, solange ein von dem Zeitglied bestimmter Zeitraum nicht abgelaufen ist.

6. Vorrichtung nach einem der vorstehenden Ansprüche, **dadurch gekennzeichnet, daß** die Erkennungseinrichtung eine Einrichtung zum Ermitteln der Schräglage des Arbeitsgeräts aufweist und bei Überschreiten eines vorbestimmten Lage-Grenzwerts einen Sonderbetriebszustand erkennt.

7. Vorrichtung oder Verfahren nach einem der vorstehenden Ansprüche, **dadurch gekennzeichnet, daß** das Arbeitsgerät eine Bodenverdichtungsvorrichtung, insbesondere ein Stampfer oder ein Schlaghammer mit Verbrennungsmotor ist.

## Claims

1. Device for controlling the speed of an internal combustion engine in a working device which can be guided at a handle, having
- a recognition device to recognise a special operating state of the working device brought about by an influence outside the working device; and
- an adjusting device which can be actuated by the recognition device upon recognition of the special operating state, in order to adjust the engine speed to a safe engine speed below an operating speed of the internal combustion engine;
**characterised in that** the recognition device has sensors on the handle to recognise whether the handle is being held correctly, wherein the sensors are formed as capacitive or optical proximity switches or touch-sensitive gripping elements.

2. Device as claimed in claim 1, **characterised in that** the special operating state is one in which
- the working device is being started; or
- the working device is not being guided correctly; or
- the working device is recognised to be in a tilted position exceeding an admissible range for an inclined position.

3. Device as claimed in claim 1 or 2, **characterised in that** the recognition device has means for recognising an increase in the speed of the internal combustion engine from the stopped condition.

4. Device as claimed in any one of the preceding claims, **characterised in that** the recognition device has means for recognising a power supply condition of an ignition system of the internal combustion engine.

5. Device as claimed in any one of the preceding claims, **characterised in that** the recognition device has a timing member which can be triggered when the internal combustion engine is started, and that the adjusting device adjusts the engine speed to a safe engine speed as long as a period of time set by the timing member has not elapsed.

6. Device as claimed in any one of the preceding claims, **characterised in that** the recognition device has a device for ascertaining the inclined position of the working device and if a predetermined position limit value is exceeded it recognises this as a special operating state.

7. Device or method as claimed in any one of the preceding claims, **characterised in that** the working device is a ground compacting device, in particular a rammer or a paving breaker with an internal combustion engine.

## Revendications

1. Dispositif pour commander la vitesse de rotation d'un moteur à combustion interne dans un engin de travail pouvant être guidé par une poignée, comportant
- un dispositif de reconnaissance pour reconnaître un état de fonctionnement particulier de l'engin de travail, provoqué par action de l'extérieur sur l'engin de travail ; et
- un dispositif de réglage, commandable par le dispositif de reconnaissance en cas de reconnaissance de l'état de fonctionnement particulier, pour le réglage de la vitesse de rotation du moteur à une vitesse de sécurité inférieure à une vitesse de rotation de fonctionnement du moteur à combustion interne ;
**caractérisé en ce que** le dispositif de reconnaissance comporte des capteurs sur la poignée pour reconnaître que la poignée est tenue convenablement, les capteurs étant réalisés comme commutateurs de proximité capacitifs ou optiques ou comme éléments de préhension réagissant au contact.

2. Dispositif selon la revendication 1, **caractérisé en ce que** l'état de fonctionnement particulier est un état dans lequel
- l'engin de travail est démarré ; ou
- l'engin de travail n'est pas guidé convenablement ; ou
- une position oblique de l'engin de travail à l'extérieur d'un domaine admissible pour une position oblique est reconnue.

3. Dispositif selon la revendication 1 ou 2, **caractérisé en ce que** le dispositif de reconnaissance comporte des moyens pour reconnaître une augmentation de la vitesse de rotation du moteur à combustion interne depuis l'arrêt.

4. Dispositif selon l'une des revendications précédentes, **caractérisé en ce que** le dispositif de reconnaissance comporte des moyens pour reconnaître un état d'alimentation en énergie d'un système d'allumage du moteur à combustion interne.

5. Dispositif selon l'une des revendications précédentes, **caractérisé en ce que** le dispositif de reconnaissance comporte un organe de temps déclenchable au démarrage du moteur à combustion interne, et **en ce que** le dispositif de réglage règle la vitesse de rotation du moteur à la vitesse de rotation de sécurité, tant qu'un laps de temps déterminé par l'organe de temps ne s'est pas écoulé.

6. Dispositif selon l'une des revendications précédentes, **caractérisé en ce que** le dispositif de reconnaissance comporte un dispositif pour déterminer la position oblique de l'engin de travail et, en cas de dépassement d'une valeur limite prédéterminée de la position, reconnaît un état de fonctionnement particulier.

7. Dispositif ou procédé selon l'une des revendications précédentes, **caractérisé en ce que** l'engin de travail est un dispositif de compactage du sol, en particulier un pilon ou un marteau-pilon à moteur à combustion interne.
